Europäisches Patentamt

European Patent Office

Office européen des brevets

(19)

(11) **EP 0 744 021 B1**

(12) **EUROPÄISCHE PATENTSCHRIFT**

| | |
|---|---|
| (45) Veröffentlichungstag und Bekanntmachung des Hinweises auf die Patenterteilung:<br>**29.04.1998 Patentblatt 1998/18** | (51) Int Cl.[6]: **G01N 27/30** |
| (21) Anmeldenummer: **95909688.4** | (86) Internationale Anmeldenummer:<br>**PCT/EP95/00454** |
| (22) Anmeldetag: **08.02.1995** | (87) Internationale Veröffentlichungsnummer:<br>**WO 95/22050 (17.08.1995 Gazette 1995/35)** |

(54) **REFERENZELEKTRODE FÜR GALVANISCHE ZELLEN MIT EINEM IONENLEITENDEN FESTELEKTROLYTEN**

REFERENCE ELECTRODE FOR ELECTROLYTIC CELLS HAVING AN ION-CONDUCTING SOLID ELECTROLYTE

ELECTRODE DE REFERENCE POUR CELLULES ELECTROLYTIQUES AVEC ELECTROLYTE SOLIDE CONDUCTEUR IONIQUE

(84) Benannte Vertragsstaaten:
**CH DE DK FR GB IT LI NL SE**

(30) Priorität: **08.02.1994 DE 4403909**

(43) Veröffentlichungstag der Anmeldung:
**27.11.1996 Patentblatt 1996/48**

(73) Patentinhaber: **Max-Planck-Gesellschaft zur Förderung der Wissenschaften e.V.**
**80539 München (DE)**

(72) Erfinder:
• **NÄFE, Helfried**
**D-70563 Stuttgart (DE)**
• **SCHWANDT, Carsten**
**D-70563 Stuttgart (DE)**

• **SCHMÄH, Martin**
**D-60488 Frankfurt (DE)**

(74) Vertreter: **Weiss, Wolfgang, Dipl.-Chem. Dr. et al**
**Patentanwälte**
**Weickmann & Partner,**
**Kopernikusstrasse 9**
**81679 München (DE)**

(56) Entgegenhaltungen:
**DE-A- 4 112 301**

• **SOLID STATE IONICS, Band. 23, Nr. 1,2, published March 1987, MARUYAMA, T. et al. "Potentiometric gas sensor for carbon dioxide using solid electrolytes" pages 107-112,**

**Beschreibung**

Die vorliegende Erfindung betrifft eine Referenzelektrode für galvanische Zellen mit einem ionenleitenden Festelektrolyten, Sensoren, die die erfindungsgemäße Referenzelektrode umfassen und deren Verwendung zur Bestimmung von Gasen.

Die Verwendung von galvanischen Festelektrolytzellen als Gassensoren, insbesondere als Sauerstoffsensoren, ist seit langem bekannt. Sensoren für andere Gase sind jedoch bisher kaum kommerziell erhältlich. Dies liegt insbesondere daran, daß es vergleichsweise schwieriger ist, praktisch einsetzbare Referenzelektroden zu realisieren. Beim Einsatz von kationenleitenden Festelektrolyten, beispielsweise eines Natriumionenleiters, bedeutet das die Aufrechterhaltung eines definierten Natriumpotentials über große Zeiträume hinweg. Gemäß dem Stand der Technik gelingt das nach wie vor am besten mit Hilfe von metallischem Natrium, das bei den Betriebstemperaturen des Sensors von häufig über 500°C flüssig ist und eine sehr hohe Reaktivität aufweist. Daher ergeben sich bei der Konstruktion einer solchen Elektrode erhebliche Schwierigkeiten, die Elektrodenräume hermetisch voneinander und von der Umgebung zu isolieren. Durch Reaktionen der Natriumschmelze mit dem Dichtungsmaterial oder anderen Komponenten der galvanischen Zelle wird die Stabilität des Sensorsignals beeinträchtigt, oder der Sensor wird mit der Zeit gänzlich zerstört.

Als Alternative wurde in der DE-A-41 12 301.8 vorgeschlagen, Referenzelektroden zu verwenden, die eine Alkalimetallverbindung, insbesondere eine Natriumverbindung in einem multinären Mehrphasengleichgewicht (z.B. binäre Na/Metall-Verbindungen oder ternäre Na/Metall/Oxid-Verbindungen), enthält. Beispiele derartiger Referenzelektroden mit binären Natrium/Metall-Verbindungen sind Na-Sb oder Na-Bi, Beispiele derartiger Referenzelektroden mit ternären Natrium/Metall/Oxid-Verbindungen sind Na-Co-Oxid oder Na-Ni-Oxid. Aufgrund der Giftigkeit der zum Einsatz gelangenden Schwermetallverbindungen erweist sich jedoch die Herstellung dieser Referenzelektrodensysteme als problematisch.

Weiterhin ist bekannt, daß die an der Phasengrenze zwischen dem Festelektrolyten und einem darauf haftenden Edelmetall sich einstellende Metallaktivität die Rolle eines Referenzsystems erfüllt (vgl. Saito und Maruyama, Solid State Ionics 28-30 (1988), 1644). Dabei besteht jedoch leicht die Gefahr, daß wegen der naturgemäß unvollkommenen Trennung von Referenz- und Meßelektrode die Referenz mit dem Meßmedium, beispielsweise $CO_2$ und $O_2$, reagiert. Es ist dann nur eine Frage der Zeit, daß die Zellspannung eines solchen Sensors gegen 0 geht und die Referenzelektrode ihre Funktionalität verliert (vgl. Maruyama et al., Solid State Ionics 23 (1987), 107).

In der oben genannten Literaturstelle Maruyama et al. (Solid State Ionics 23 (1987), 107) wird auch ein $CO_2$-Sensor vorgeschlagen, bei dem eine Kombination verschiedener Festelektrolyte, und zwar eines Sauerstoff- und eines Natriumionenleiters, verwendet wird. Referenzelektrode ist dabei das nach dem Aneinandersintern der beiden Festelektrolyte an der Phasengrenzfläche zwischen diesen gebildete $Na_2O$. Nachgewiesenermaßen reagiert das Potential dieser Referenzelektrode mehr als erwartet auf Änderungen des Sauerstoffpartialdrucks in der umgebenden Atmosphäre. Folglich ist die Zellspannung des resultierenden Sensors zeitlich nicht stabil und keine eindeutige Funktion des $CO_2$-Partialdrucks.

Eine Aufgabe der vorliegenden Erfindung ist die Bereitstellung einer Referenzelektrode, bei der die oben genannten Nachteile des Standes der Technik mindestens teilweise vermieden werden, die insbesondere eine dauerhafte Isolierung des Referenzelektrodenraums gegenüber der Umgebung gewährleistet und somit eine im Vergleich zu bekannten Systemen höhere Langzeitstabilität besitzt sowie wesentlich einfacher herzustellen ist.

Diese Aufgabe wird erfindungsgemäß gelöst durch Bereitstellung einer Referenzelektrode für galvanische Zellen mit einem ionenleitenden Festelektrolyten, umfassend eine mit einer elektronisch leitenden Phase und einem ionenleitenden Festelektrolyten in Kontakt stehende Glasphase, in der die Spezies gelöst ist, für die der Festelektrolyt leitend ist, wobei die Glasphase eine nur von der Temperatur abhängige und zeitlich stabile Aktivität dieser Spezies realisiert und zugleich zur hermetischen Isolierung des Referenzelektrodenraumes gegenüber der Umgebung dient.

Der Begriff "Glasphase" im Sinne der vorliegenden Erfindung bedeutet eine hochviskose Phase mit überwiegend amorpher Struktur, die einfache oder/und zusammengesetzte Phosphate, Silikate, Borosilikate oder/und Borate als Netzwerkbildner und unterschiedlichste Kationen (Alkali-, Erdalkalimetalle u.a.) als Netzwerkwandler enthält. Während des Aufschmelzens der Glasphase lösen, sich darin weitere Spezies die zusammen mit dem Glas als Lösungsmittel eine hochviskose Lösung bilden. Der Begriff "Spezies" umfaßt in diesem Zusammenhang insbesondere Atome und chemische Verbindungen, die überwiegend kovalent oder ionogen im Glas gelöst sind und die über entsprechende dynamische Gleichgewichte für die jeweilige Referenzelektrode potentialbestimmend wirken.

Die Glasphase der erfindungsgemäßen Referenzelektrode weist günstigerweise eine Zusammensetzung auf, die die Funktionalität der Referenzelektrode bei deren Herstellung und Anwendung nicht durch chemische oder/und physikalische Veränderungen beeinträchtigt. Insbesondere, wenn die Referenzelektrode einen kationenleitenden Festelektrolyten, z.B. einen alkalimetallionenleitenden Festelektrolyten, umfaßt, sollte die Glasphase keine Komponenten enthalten, die bei Kontakt mit dem Festelektrolyten unter den beim Aufschmelzen und beim Betrieb der Referenzelektrode herrschenden Bedingungen reduzierbar sind.

Wenn die Glasphase der Referenzelektrode ein Boratglas ist, umfaßt sie vorzugsweise ein Oxidgemisch der Nominal-Zusammensetzung

0 bis 20 Masse-% $Al_2O_3$,
18 bis 30 Masse-% $B_2O_3$,
36 bis 53 Masse-% BaO,
15 bis 20 Masse-% CaO und
0 bis 15 Masse-% $Na_2O$,

wobei der Anteil von $B_2O_3$ plus $Al_2O_3$ im Bereich von 28 bis 40 Masse-% liegt. Besonders bevorzugt umfaßt die Glasphase ein Oxidgemisch mit der Nominal-Zusammensetzung

36 bis 46 Masse-% BaO,
18 bis 20 Masse-% CaO,
15 bis 20 Masse-% $Al_2O_3$,
15 bis 22 Masse-% $B_2O_3$ und
0 bis 5 Masse-% $Na_2O$.

Die Glasphase sollte einen Schmelzbereich aufweisen, der ein Aufschmelzen ermöglicht, ohne daß bei den dazu notwendigen Temperaturen irreversible Veränderungen in den übrigen Komponenten des Sensors auftreten und der trotzdem gewährleistet, daß die Spezies, für die der Festelektrolyt leitend ist, in vertretbarer Zeit und in ausreichender Menge in der Glasphase gelöst wird. Weiterhin besitzt die Glasphase vorzugsweise ein an das Festelektrolytmaterial weitgehend angepaßtes Ausdehnungsverhalten.

In einer besonderen Ausführungsform kann die Glasphase der Referenzelektrode aus zwei unterschiedlichen Nominalzusammensetzungen gebildet werden, die sich durch unterschiedliche Schmelzbereiche und damit unterschiedliche Viskostäten bei der Betriebstemperatur auszeichnen. Die Zusammensetzung mit dem tieferen Schmelzbereich steht dabei unmittelbar mit dem ionenleitenden Festelektrolyten in Kontakt und wird von der Umgebung zusätzlich durch eine Glasschicht der zweiten Zusammensetzung isoliert.

Die Erfindung soll weiterhin im Zusammenhang mit den Figuren 1 bis 5 erläutert werden. Es zeigen:

Figur 1    eine erste Ausführungsform der erfindungsgemäßen Referenzelektrode mit einem sauerstoffionenleitenden Festelektrolyten,

Figur 2    die Temperaturabhängigkeit des Potentials der Referenzelektrode von Figur 1 gegen eine $ZrO_2$/Pt, $O_2$ (0,2 bar)-Elektrode,

Figur 3    eine zweite Ausführungsform der erfindungsgemäßen Referenzelektrode mit einem natriumionenleitenden Festelektrolyten,

Figur 4    die Temperaturabhängigkeit des Potentials der Referenzelektrode von Figur 3 gegen eine $\beta''$-$Al_2O_3$/$Na_2CO_3$, Au, $CO_2$, $O_2$-Elektrode, und

Figur 5    eine dritte Ausführungsform der erfindungsgemäßen Referenzelektrode mit der Kombination eines sauerstoffionenleitenden und eines natriumionenleitenden Festelektrolyten.

In einer ersten Ausführungsform der Erfindung ist der ionenleitende Festelektrolyt ein Sauerstoffionenleiter und die elektronisch leitende Phase ein unter den Herstellungsbedingungen der Referenzelektrode oberflächlich oxidierbares Metall, dessen Oxidschicht mindestens teilweise während des Aufschmelzens der Glasphase in dieser gelöst wird. Die Oxidschicht des verwendeten Metalls sollte unter den bei der Präparation der Referenzelektrode herrschenden Bedingungen nicht reduzierbar sein. Beispiele für geeignete Metalle sind Eisen, Kobalt, Nickel, Mangan oder eine Legierung auf der Basis von einem oder mehreren dieser Metalle.

Der sauerstoffionenleitende Festelektrolyt kann beispielsweise ein Material auf der Basis von $ZrO_2$, $ThO_2$, $CeO_2$, $HfO_2$ oder $Bi_2O_3$ sein. Besonders bevorzugt als sauerstoffionenleitender Festelektrolyt ist ein Material auf der Basis von kubischem, tetragonalem oder partiell stabilisiertem $ZrO_2$.

Die Herstellung einer derartigen Referenzelektrode mit einem sauerstoffionenleitenden Festelektrolyten erfolgt beispielsweise dadurch, daß der Festelektrolyt in einen Metallkörper durch Glaslöten eingefügt wird, ohne zusätzlich von einem speziell hergestellten Referenzelektrodensystem Gebrauch zu machen. Derselbe Effekt läßt sich auch dadurch erreichen, daß die Komponenten Festelektrolyt, Glas und Metall in einer Schichtstruktur aufeinander angeordnet sind. Das Lotglas benetzt während des Lötprozesses sowohl die Oberfläche des Festelektrolyten als auch die des Metalls, wodurch sich an der Phasengrenze Metall-Glas die oxidische Anlaufschicht des Metalls im Glas löst und das im Glas gelöste Oxid zusammen mit dem Metall ein Gleichgewichtsystem zwischen einer oxidierten und einer reduzierten Phase bildet. Auf diese Weise wird mit einfachsten Mitteln ein hermetisch abgeschlossener Referenzelektrodenraum bereitgestellt. Der sauerstoffionenleitende Festelektrolyt ist vorzugsweise ein kubisch (z.B. $YO_{1,5}$) stabilisierter $ZrO_2$-Körper. Die Meßelektrode wird durch einen elektronisch leitenden Überzug (z.B. Pt) auf der mit der Umgebung in Kontakt stehenden Fläche des Festelektrolyten realisiert.

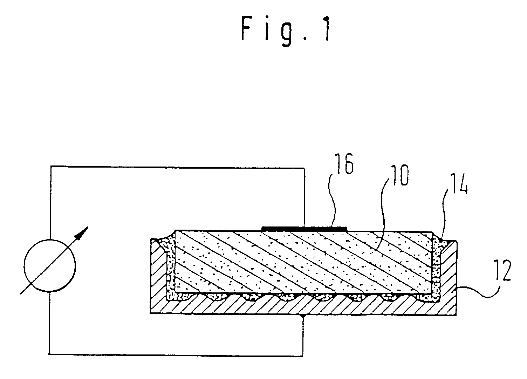

Der prinzipielle Aufbau dieser Ausführungsform der erfindungsgemäßen Referenzelektrode ist in Figur 1 exemplarisch dargestellt. Der sauerstoffionenleitende Festelektrolyt (10), ein Pellet aus beispielsweise $YO_{1,5}$-stabilisiertem $ZrO_2$, ist in einen entsprechend gestalteten Metallkörper (12) eingefügt, wobei als Metallkomponente vorzugsweise eine im Ausdehnungskoeffizienten an $ZrO_2$ angepaßte Fe-Ni-Einschmelzlegierung (z.B. FeNi48) verwendet wird. Unter besonders korrosiven Bedingungen kann stattdessen beispielsweise auch zunderbeständiger Stahl (z.B. X10CrAl13) eingesetzt werden. Die Oberfläche des Metallkörpers (12) sollte in der Lotzone, d.h. in dem mit der Glasphase in Kontakt befindlichen Bereich, durch thermische Behandlung vorzugsweise geringfügig angelaufen sein. Weiterhin ist es bevorzugt, daß die Metalloberfläche im Bereich der unmittelbaren Berührung mit der Glasphase zur Schaffung einer möglichst dünnen Glasschicht durch flache Nuten strukturiert ist. Als Lot kann z.B. ein Oxidgemisch (14) der Zusammensetzung 41 Masse-% BaO, 19 Masse-% $Al_2O_3$, 19 Masse-% CaO und 21 Masse-% $B_2O_3$ dienen, das als Pulver in einer Amylacetat-Suspension auf den Boden der Metallkappe dünn aufgestrichen und in den übrigen Lötspalt eingebracht wird. Das Aufschmelzen des Oxidgemisches erfolgt bei etwa 1060°C. Die elektronisch leitende Phase der Referenzelektrode ist der Metallkörper (12). Die Meßelektrode wird durch einen elektronisch leitenden Überzug (16), z.B. aus Pt, auf der Umgebungsseite des Festelektrolyten gebildet.

Das Potential der auf diese Weise hergestellten Referenzelektrode zeigt im Bereich zwischen 350 und 500°C eine lineare Temperaturabhängigkeit. Die Zellspannung gegen Luft folgt der Gleichung:

$$U[mV] = -1401 + 0{,}490\, T - 0{,}0215\, T \ln p_{O_2}$$

wobei T in K und $p_{O_2}$ in bar angegeben ist.

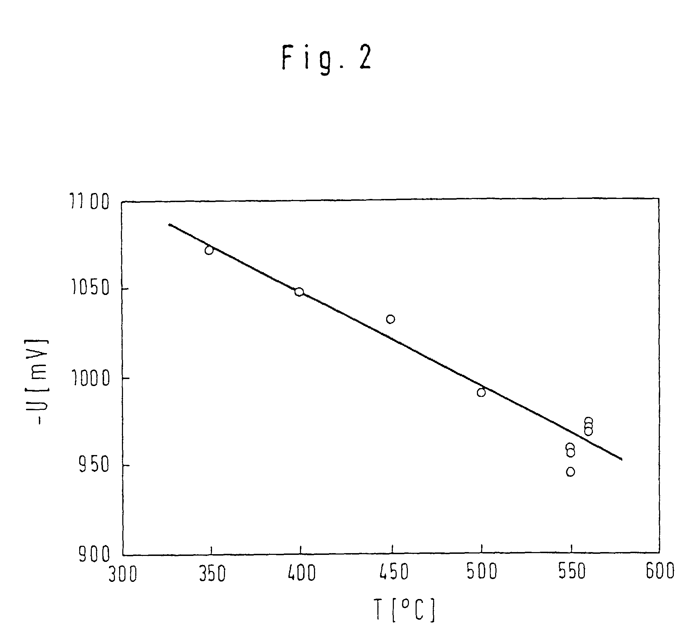

Aus Figur 2 ist die Temperaturabhängigkeit der Zellspannung U[mV] der erfindungsgemäßen Referenzelektrode gegen eine $ZrO_2$/Pt, $O_2$ (0,2 bar)-Elektrode dargestellt.

In einer zweiten Ausführungsform der vorliegenden Erfindung ist der ionenleitende Festelektrolyt ein Kationenleiter und die Glasphase realisiert durch Lösen von Metallspezies eine Metallaktivität. Der kationenleitende Festelektrolyt kann beispielsweise ein Material auf der Basis von beta-$Al_2O_3$, Nasicon oder Lisicon sein. Er ist vorzugsweise ein Alkalimetall-, z.B. ein Natrium-, Kalium- oder Lithiumionenleiter und besonders bevorzugt ein Natriumionenleiter, beispielsweise Na-beta-$Al_2O_3$.

Die Metallaktivität der Glasphase kann realisiert werden, indem man ein Glas mit einem definierten Metallgehalt verwendet, die Glasphase während des Aufschmelzens mit der angrenzenden Schicht des Festelektrolyten equilibriert oder/und die Glasphase nach dem Aufschmelzen auf den Festelektrolyten durch coulometrische Titration mit einer Metallspezies anreichert.

Bei einer erfindungsgemäßen Referenzelektrode mit einem alkalimetallionenleitenden Festelektrolyten ist es günstig, wenn die Glasphase eine Zusammensetzung aufweist, die kein Bleioxid in einer die Viskosität der Glasphase erniedrigenden Menge enthält. Das Vorhandensein von Bleioxid kann bei Betrieb der Referenzelektrode zu dessen Reduktion und damit zu irreversiblen chemischen und physikalischen Veränderungen in der Referenzelektrodenanordnung führen. Vorzugsweise enthält die Glasphase Bleioxid in einer Menge von weniger als 10 Masse-%, besonders bevorzugt weniger als 5 Masse-% und am meisten bevorzugt weniger als 1 Masse-%.

Die Meßelektrode eines Sensors mit einem kationenleitenden, insbesondere einem alkalimetallionenenleitenden Festelektrolyten umfaßt ein elektronisch leitendes Material, vorzugsweise eine Au-Schicht, auf der dem Meßmedium zugewandten Oberfläche des Festelektrolyten. Das elektronisch leitende Material hat Kontakt zu einer die Festelektrolytoberfläche bedeckenden Schicht einer Verbindung, z.B. $Na_2CO_3$, deren Kation mit dem mobilen Ion des Festelektrolyten identisch ist und die mit dem zu messsenden Gas, z.B. $CO_2$ und $O_2$, in einem thermodynamischen Gleichgewicht steht. Entsprechend werden zur Messung von $NO_x$ ($N_2O$, NO, $NO_2$) Nitrate, zur Messung von $SO_x$ ($SO_2$, $SO_3$) Sulfate und zur Messung von $CO_2$ Carbonate verwendet.

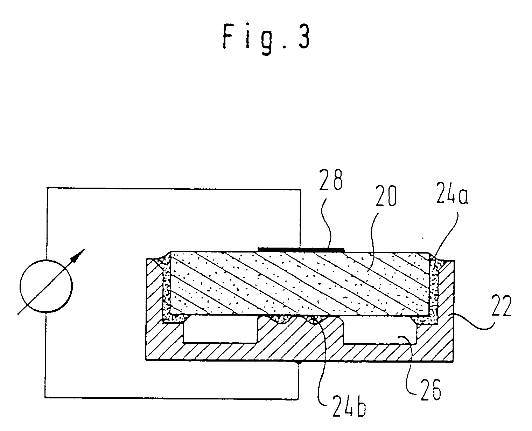

Der prinzipielle Aufbau dieser Ausführungsform der erfindungsgemäßen Referenzelektrode ist in Figur 3 exemplarisch dargestellt. Der kationenleitende Festelektrolyt (20), z.B. ein Pellet aus Na-$\beta$"-$Al_2O_3$, ist in einen entsprechend gestalteten Metallkörper, vorzugsweise eine Metallkappe (22), eingefügt, wobei als Metallkomponente vorzugsweise eine Einschmelzlegierung (z.B. FeNi 48) oder zunderbeständiger Stahl (z.B. X10CrAl13) verwendet wird. Auch hier ist eine planare Schichtstruktur der eingesetzten Materialien denkbar. Als Glasphase (24a, b) dient z.B. ein Oxidgemisch mit der Zusammensetzung 51 Masse-% BaO, 10 Masse-% $Al_2O_3$, 15 Masse-% CaO, 22 Masse-% $B_2O_3$ und 2 Masse-% $Na_2O$. Die Glasphase (24a), die in Kontakt mit der Umgebung steht, kann beispielsweise derart ausgewählt sein, daß sie einen höheren Schmelzbereich, z. B. einen um 100 - 200°C, vorzugsweise um etwa 150°C höheren Schmelzbereich als die Glasphase (24b) aufweist. Dafür kann z.B. ein Oxidgemisch mit der Zusammensetzung 41 Masse-% BaO, 19 Masse-% $Al_2O_3$, 19 Masse-% CaO, 21 Masse-% $B_2O_3$ dienen. Die Glasphase kann als Pulver in einer Amylacetat-Suspension auf den Boden der Metallkappe (22) dünn aufgestrichen werden. Die in kontakt mit der Glasphase (24b) stehende Fläche ist vorzugsweise durch einen in den Metallkörper eingebrachten Absatz (26) vom übrigen Lötspalt getrennt und zur Schaffung einer möglichst dünnen Glasschicht durch flache Nuten strukturiert. Die Gläser werden zwischen 900 und 1060°C aufgeschmolzen.

Die verwendete Glasphase (24b) kann einen definierten Metallgehalt aufweisen oder/und den erforderlichen Metallgehalt durch Equilibrierung mit dem Festelektrolyten aufnehmen.

Die Anreicherung der Glasphase mit der Metallspezies, z.B. Natrium, kann ebenso durch Anlegen einer Spannung zwischen der Au-Schicht (28) und der Metallkappe (22), d.h. durch coulometrische Titration, erfolgen.

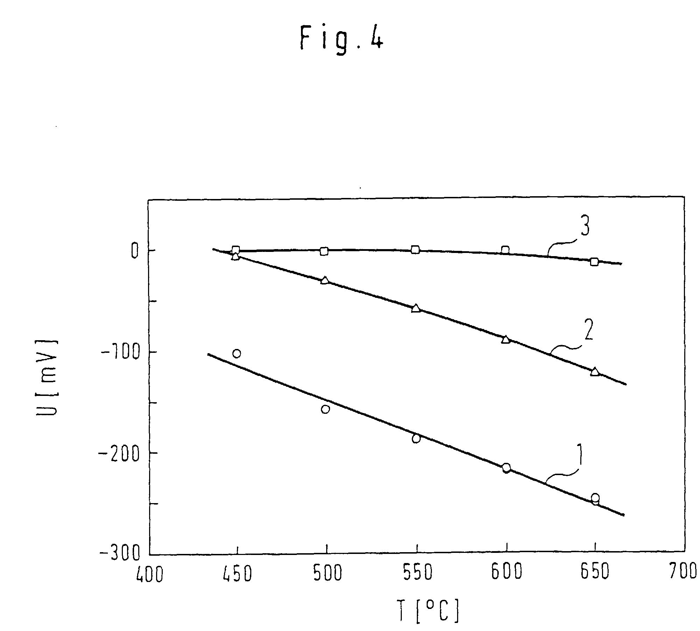

Eine auf diese Weise hergestellte Referenzelektrode zeigt gegen eine Na-$\beta$"-Al$_2$O$_3$/Na$_2$CO$_3$, Au, CO$_2$ (Pco$_2$), O$_2$ (Po$_2$)-Elektrode die in Figur 4 dargestellte Temperaturabhängigkeit der Zellspannung: (Kurve 1: Pco$_2$ = 20,8 Pa, Po$_2$ = 20,5 Pa; Kurve 2: Pco$_2$ = 1 KPa, Po$_2$ = 1 KPa; Kurve 3: Pco$_2$ = 16,3 KPa, Po$_2$ = 85 KPa)

Ein weiterer Gegenstand der vorliegenden Erfindung ist ein Sensor, insbesondere zur Messung von Gasen, der mindestens eine erfindungsgemäße Referenzelektrode und mindestens eine für die jeweilige Sensorfunktion geeignete Meßelektrode umfaßt. Das Meßsignal des Sensors entsteht durch einen Potentialunterschied zwischen Referenz- und Meßelektrode, der dem Partialdruck der zu messenden Gase, insbesondere O$_2$, NO$_x$ (N$_2$O, NO und NO$_2$), SO$_x$ (SO$_2$, SO$_3$) oder CO$_2$ proportional ist.

Vorzugsweise enthält der erfindungsgemäße Sensor eine Kombination von zwei unterschiedlichen Referenzelektrode/Festelektrolyt/Meßelektrode-Anordnungen. Wenn es sich um eine Kombination eines sauerstoffionen- und eines kationenleitenden Festelektrolyten handelt, liefert der resultierende Sensor ein vom Sauerstoffpartialdruck des Meßmediums unabhängiges Meßsignal. Dabei ist es bevorzugt, daß die beiden Meßelektroden des erfindungsgemäßen Sensors in Kontakt mit Meßmedien stehen, in denen ein im wesentlichen gleicher Sauerstoffpartialdruck herrscht. Besonders bevorzugt stehen die zwei Meßelektroden in Kontakt mit dem gleichen Meßmedium.

Weiterhin ist es bevorzugt, daß die zwei Referenzelektroden einen mindestens teilweise gemeinsamen Referenzelektrodenraum bilden, der die beiden Festelektrolyte des Sensors elektrisch miteinander verbindet.

Sensoren dieser Art sind insbesondere zum CO$_2$-, NO$_x$- oder SO$_x$-Nachweis sowohl im Spurenbereich als auch in größeren Konzentrationen von Interesse.

Bei dieser Ausführungsform der vorliegenden Erfindung sind die in Kontakt mit dem jeweiligen Festelektrolyten stehenden Glasphasen elektrisch miteinander verbunden, z.B. über eine gemeinsame elektronisch leitende Phase. Andererseits kann auch eine gemeinsame Glasphase verwendet werden, die gleichzeitig eine definierte Alkalimetall- und Sauerstoffaktivität aufweist.

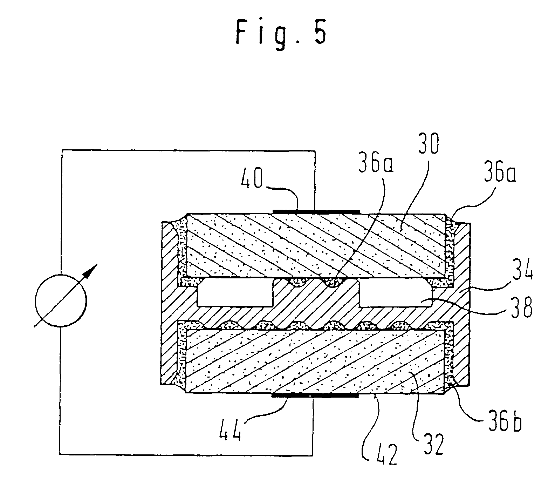

Der prinzipielle Aufbau einer Ausführungsform eines Sensors mit zwei Referenzelektroden ist in Figur 5 exemplarisch dargestellt. Die beiden Festelektrolyte, Pellets aus Na-$\beta$"-Al$_2$O$_3$ (30) und kubisch (z.B. YO$_{1,5}$)-stabilisiertem ZrO$_2$ (32), sind in einem entsprechend gestalteten Metallkörper (34), der vorzugsweise als Kappe ausgebildet ist und aus zunderbeständigem Stahl (z.B. X10CrAl13) besteht, eingefügt, wobei auch hier wieder ein planarer Aufbau möglich ist. Als Glasphase (36a, 36b) kann ein Oxidgemisch mit z.B. der Zusammensetzung 41 Masse-% BaO, 19 Masse-% Al$_2$O$_3$, 19 Masse-% CaO, 21 Masse-% B$_2$O$_3$ dienen, das als Pulver in einer Amylacetat-Suspension auf die Auflageflächen der beiden Festelektrolyte aufgestrichen und danach in die übrigen Lötspalte eingebracht wird. Die Oberfläche des Metallkörpers (34) ist im Bereich der unmittelbaren Berührungsfläche mit den Festelektrolyten zur Schaffung einer möglichst dünnen Glasschicht durch flache Nuten strukturiert. Die dem alkalimetallionenleitenden Festelektrolyten (30) zugewandte Fläche weist zusätzlich einen Absatz (38) auf, der die Glasphase (36a) unterbricht. Die Glasphase (36a) kann - wie in der Erläuterung zu Fig. 3 beschrieben - aus einer Komponente mit höherem Schmelzbereich und einer Komponente mit niedrigerem Schmelzbereich bestehen. Unter Anlegen eines geringen Drucks auf die beiden Festelektrolytpellets wird das Glas aufgeschmolzen. Nachdem eine Fläche (40) der Meßelektrodenseite des natriumionenleitenden Festelektrolyten mit Au bedampft worden ist, wird darauf eine dünne Schicht eines Natriumsalzes (z. B. NaNO$_3$, Na$_2$CO$_3$ oder Na$_2$SO$_4$) abgeschieden. Die der Umgebung zugewandte Oberfläche (42) des sauerstoffionenleitenden Festelektrolyten (32) wird teilweise mit einem Pt-Überzug (44) versehen. Es wird die Zellspannung zwischen der Au/Na$_2$CO$_3$/$\beta$"-Al$_2$O$_3$- und der Pt/YO$_{1,5}$-stabilisierten ZrO$_2$-Elektrode gemessen.

## Patentansprüche

1. Referenzelektrode für galvanische Zellen mit einem ionenleitenden Festelektrolyten, umfassend eine mit einer elektronisch leitenden Phase und einem ionenleitenden Festelektrolyten in Kontakt stehende Glasphase, in der die Spezies gelöst ist, für die der Festelektrolyt leitend ist, wobei die Glasphase eine nur von der Temperatur abhängige und zeitlich stabile Aktivität dieser Spezies realisiert und zugleich zur hermetischen Isolierung des Referenzelektrodenraumes gegenüber der Umgebung dient.

2. Referenzelektrode nach Anspruch 1,
   **dadurch gekennzeichnet,**
   daß die Glasphase eine Zusammensetzung aufweist, die die Funktionalität der Referenzelektrode bei deren Herstellung und Anwendung nicht durch chemische oder/und physikalische Veränderungen beeinträchtigt.

3. Referenzelektrode nach Anspruch 1 oder 2,
   **dadurch gekennzeichnet,**
   daß die Glasphase ein Oxidgemisch der Zusammensetzung

   0 bis 20 Masse-% Al$_2$O$_3$,
   18 bis 30 Masse-% B$_2$O$_3$,
   36 bis 53 Masse-% BaO,
   15 bis 20 Masse-% CaO und
   0 bis 15 Masse-% Na$_2$O

   umfaßt, wobei der Anteil von B$_2$O$_3$ plus Al$_2$O$_3$ im

Bereich von 28 bis 40 Masse-% liegt.

4. Referenzelektrode nach einem der Ansprüche 1 bis 3,
   **dadurch gekennzeichnet,**
   daß die Glasphase ein insbesondere an das Festelektrolytmaterial weitgehend angepaßtes Ausdehnungsverhalten aufweist.

5. Referenzelektrode nach einem der Ansprüche 1 bis 4,
   **dadurch gekennzeichnet,**
   daß der ionenleitende Festelektrolyt ein Sauerstoffionenleiter und die elektronisch leitende Phase ein unter den Herstellungsbedingungen der Referenzelektrode oberflächlich oxidierbares Metall ist, dessen Oxidschicht mindestens teilweise in der Glasphase gelöst ist.

6. Referenzelektrode nach Anspruch 5,
   **dadurch gekennzeichnet,**
   daß das Metall Eisen, Kobalt, Nickel, Mangan oder eine Legierung auf Basis von einem oder mehreren dieser Metalle ist.

7. Referenzelektrode nach Anspruch 5 oder 6,
   **dadurch gekennzeichnet,**
   daß der sauerstoffionenleitende Festelektrolyt ein Material auf der Basis von $ZrO_2$, $ThO_2$, $CeO_2$, $HfO_2$ oder $Bi_2O_3$ ist.

8. Referenzelektrode nach einem der Ansprüche 1 bis 4,
   **dadurch gekennzeichnet,**
   daß der ionenleitende Festelektrolyt ein Kationenleiter ist und die Glasphase durch Lösen von Metallspezies eine Metallaktivität realisiert.

9. Referenzelektrode nach Anspruch 8,
   **dadurch gekennzeichnet,**
   daß der ionenleitende Festelektrolyt ein Alkalimetallionenleiter ist und die Glasphase durch Lösen von Alkalimetallspezies eine Alkalimetallaktivität realisiert.

10. Referenzelektrode nach Anspruch 8 oder 9,
    **dadurch gekennzeichnet,**
    daß der kationenleitende Festelektrolyt ein Material auf der Basis von beta-$Al_2O_3$, Nasicon oder Lisicon ist.

11. Referenzelektrode nach einem der Ansprüche 8 bis 10,
    **dadurch gekennzeichnet,**
    daß der kationenleitende Festelektrolyt ein Natriumionenleiter ist.

12. Referenzelektrode nach einem der Ansprüche 8 bis 11,
    **dadurch gekennzeichnet,**
    daß die Metallaktivität der Glasphase realisiert ist, indem ein Glas mit definiertem Metallgehalt verwendet oder/und die Glasphase während des Aufschmelzens mit der angrenzenden Schicht des Festelektrolyten equilibriert oder/und die Glasphase nach dem Aufschmelzen auf den Festelektrolyten durch coulometrische Titration mit einer Metallspezies angereichert wird.

13. Referenzelektrode nach einem der Ansprüche 8 bis 12,
    **dadurch gekennzeichnet,**
    daß die Glasphase eine Zusammensetzung aufweist, die kein Bleioxid in einer die Viskosität erniedrigenden Menge enthält.

14. Sensor, insbesondere zur Messung von Gasen,
    **dadurch gekennzeichnet,**
    daß er mindestens eine Referenzelektrode nach einem der Ansprüche 1 bis 13 und mindestens eine für die jeweilige Sensorfunktion geeignete Meßelektrode umfaßt.

15. Sensor nach Anspruch 14,
    **dadurch gekennzeichnet,**
    daß er eine Kombination von zwei unterschiedlichen Referenzelektrode/Festelektrolyt/Meßelektrode-Anordnungen umfaßt.

16. Sensor nach Anspruch 15,
    **dadurch gekennzeichnet,**
    daß die zwei Meßelektroden in Kontakt mit dem gleichen Meßmedium stehen.

17. Sensor nach Anspruch 15 oder 16,
    **dadurch gekennzeichnet,**
    daß die zwei Referenzelektroden einen mindestens teilweise gemeinsamen Referenzelektrodenraum bilden, der die beiden Festelektrolyte elektrisch miteinander verbindet.

18. Sensor nach einem der Ansprüche 14 bis 17,
    **dadurch gekennzeichnet,**
    daß er eine Referenzelektrode nach einem der Ansprüche 5 bis 7 und eine Referenzelektrode nach einem der Ansprüche 8 bis 13 und eine Kombination aus einem sauerstoffionenleitenden und einem kationenleitenden Festelektrolyten mit entsprechend geeigneten Meßelektroden umfaßt.

19. Verwendung einer Referenzelektrode nach einem der Ansprüche 1 bis 13 in einem Sensor, insbesondere zur Messung von Gasen.

20. Verwendung eines Sensors nach einem der Ansprüche 15 bis 18 zur Messung von Gasen, der ein vom Sauerstoffpartialdruck des Meßmediums unabhängiges Signal liefert.

21. Verwendung nach Anspruch 19 oder 20 zur Messung von $O_2$, $CO_2$, $NO_x$ oder $SO_x$.

**Claims**

1. A reference electrode for electrolytic cells having an ion-conducting solid electrolyte and comprising a glass phase which is in contact with an electronically conductive phase and an ion-conducting solid electrolyte and in which the species for which the solid electrolyte is conductive is dissolved, the glass phase bringing about activity of this species which activity is only dependent on the temperature and is stable in terms of time, and simultaneously being used for hermetically insulating the reference electrode space from the surroundings.

2. A reference electrode according to claim 1, **wherein** the glass phase is of a composition that does not impair the functionality of the reference electrode by way of chemical or/and physical changes during the production and use of the electrode.

3. A reference electrode according to claim 1 or 2. **wherein** the glass phase is an oxide mixture having the composition

   0 to 20 wt.% $Al_2O_3$,
   18 to 30 wt.% $B_2O_3$,
   36 to 53 wt.% BaO,
   15 to 20 wt.% CaO and
   0 to 15 wt.% $Na_2O$

   with the proportion of $B_2O_3$ plus $Al_2O_3$ being within the range from 28 to 40 wt.%.

4. A reference electrode according to one of claims 1 to 3, **wherein** the glass phase has a coefficient of expansion which largely matches in particular that of the solid electrolyte material.

5. A reference electrode according to one of claims 1 to 4, **wherein** the ion-conducting solid electrolyte is an oxygen-ion conductor and the electronically conductive phase a metal which, under the reference electrode production conditions, is superficially oxidizable with the oxide layer dissolving at least partially in the glass phase.

6. A reference electrode according to claim 5, **wherein** the metal is iron, cobalt, nickel, manganese or an alloy based on one or several of these metals.

7. A reference electrode according to claim 5 or 6, **wherein** the oxygen-ion-conducting solid electrolyte is a material based on $ZrO_2$, $ThO_2$, $CeO_2$, $HfO_2$ or $Bi_2O_3$.

8. A reference electrode according to one of claims 1 to 4, **wherein** the ion-conducting solid electrolyte is a cation conductor and the glass phase brings about a metal activity by having metal species dissolved therein.

9. A reference electrode according to claim 8, **wherein** the ion-conducting solid electrolyte is an alkali-metal-ion conductor and the glass phase brings about an alkali metal activity by having alkali metal species dissolved therein.

10. A reference electrode according to claim 8 or 9, **wherein** the cation-conducting solid electrolyte is a material based on beta-$Al_2O_3$, Nasicon or Lisicon.

11. A reference electrode according to one of claims 8 to 10, **wherein** the cation-conducting solid electrolyte is a sodium ion conductor.

12. A reference electrode according to one of claims 8 to 11, **wherein** the metal activity of the glass phase is realized by using a glass with a defined metal content or/and equilibrizing the glass phase during fusing with the adjoining layer of solid electrolyte or/and enriching the glass phase after it has been fused onto the solid electrolyte by means of coulometric titration with a metal species.

13. A reference electrode according to one of claims 8 to 12, **wherein** the glass phase is of a composition that does not include lead oxide in a quantity which lowers the viscosity.

14. A sensor, in particular for measuring gases, **wherein** said sensor contains at least one reference electrode according to one of claims 1 to 13 and at least one measuring electrode suitable for the particular sensor function.

**15.** A sensor according to claim 14,
**wherein**
said sensor comprises a combination of two different reference electrode / solid electrolyte / measuring electrode arrangements.

**16.** A sensor according to claim 15,
**wherein**
the two measuring electrodes are in contact with the same measuring medium.

**17.** A sensor according to claim 15 or 16,
**wherein**
the two reference electrodes form a reference electrode space which is at least in part common to both and which connects the two solid electrolytes electrically with each other.

**18.** A sensor according to one of claims 14 to 17,
**wherein**
said sensor comprises a reference electrode according to one of claims 5 to 7 and a reference electrode according to one of claims 8 to 13 and a combination of an oxygen-ion-conducting and a cation-conducting solid electrolyte with suitable measuring electrodes in each case.

**19.** Use of a reference electrode according to one of claims 1 to 13 in a sensor, in particular for measuring gases.

**20.** Use of a sensor according to one of claims 15 to 18 for measuring gases, which sensor provides a signal which is independent of the partial pressure of the oxygen in the measuring medium.

**21.** Use according to claim 19 or 20 for measuring $O_2$, $CO_2$, $NO_x$ or $SO_x$.

**Revendications**

**1.** Electrode de référence pour cellules électrolytiques avec électrolyte solide à conductivité ionique comprenant une phase vitreuse se trouvant en contact avec une phase à conductivité électronique et un électrolyte solide à conductivité ionique, phase vitreuse dans laquelle est dissoute l'espèce responsable de la conductivité de l'électrode solide, moyennant quoi la phase vitreuse réalise une activité de cette espèce qui dépend uniquement de la température, est stable dans le temps et sert en même temps à l'isolation hermétique du compartiment de l'électrode de référence vis à vis de l'environnement.

**2.** Electrode de référence selon la revendication 1, caractérisée en ce que la phase vitreuse présente une composition qui n'altère pas la fonctionnalité de l'électrode de référence par des modifications chimiques ou/et physiques lors de sa confection et de son utilisation.

**3.** Electrode de référence selon la revendication 1 ou 2, caractérisée en ce que la phase vitreuse comprend un mélange d'oxydes de composition

0 à 20% de la masse d'$Al_2O_3$,
18 à 30% de la masse de $B_2O_3$,
36 à 53% de la masse de BaO,
15 à 20% de la masse de CaO et
0 à 15% de la masse de $Na_2O$, la fraction de $B_2O_3$ plus $Al_2O_3$ se situant dans la plage de 28 à 40% de la masse.

**4.** Electrode de référence selon l'une des revendications 1 à 3, caractérisée en ce que la phase vitreuse présente un comportement à la dilatation largement adapté au matériau de l'électrolyte solide en particulier.

**5.** Electrode de référence selon l'une des revendications 1 à 4, caractérisée en ce que l'électrolyte solide à conductivité ionique est un conducteur par ions oxygène et que la phase à conductivité électronique est un métal oxydable en surface dans les conditions de fabrication de l'électrode de référence, dont la couche d'oxyde est au moins partiellement dissoute dans la phase vitreuse.

**6.** Electrode de référence selon la revendication 5, caractérisé en ce que le métal est le fer, le cobalt, le nickel, le manganèse ou un alliage à base d'un ou de plusieurs de ces métaux.

**7.** Electrode de référence selon la revendication 5 ou 6, caractérisée en ce que l'électrolyte solide conducteur par ions oxygène est une substance à base de $ZrO_3$, $ThO_2$, $CeO_2$, $HfO_2$ ou de $Bi_2O_3$.

**8.** Electrode de référence selon l'une des revendications 1 à 4, caractérisée en ce que l'électrolyte solide à conductivité ionique est un conducteur cationique et que la phase vitreuse réalise une activité de métal par dissolution d'espèces métalliques.

**9.** Electrode de référence selon la revendication 8, caractérisée en ce que l'électrolyte solide à conductivité ionique est un conducteur par ions alcalins et que la phase vitreuse réalise une activité de métal alcalin par dissolution d'espèces de métaux alcalins.

**10.** Electrode de référence selon la revendication 8 ou 9, caractérisée en ce que l'électrolyte solide conducteur par cations est une substance à base d'Al$_2$O$_3$ bêta, de Nasicon ou de Lisicon.

**11.** Electrode de référence selon l'une des revendications 8 à 10, caractérisée en ce que l'électrolyte solide conducteur par cations est un conducteur par ions sodium.

**12.** Electrode de référence selon l'une des revendications 8 à 11, caractérisée en ce qu'on réalise l'activité de métal de la phase vitreuse en utilisant un verre ayant une teneur définie en métal ou/et en équilibrant la phase vitreuse pendant la fusion avec la couche contiguë de l'électrolyte solide ou/et en enrichissant la phase vitreuse après fixation par fusion sur l'électrolyte solide par titrage coulométrique avec une espèce métallique.

**13.** Electrode de référence selon l'une des revendications 8 à 12, caractérisée en ce que la phase vitreuse présente une composition qui ne contient pas d'oxyde de plomb en une quantité abaissant la viscosité.

**14.** Capteur, notamment pour le dosage de gaz, caractérisé en ce qu'il comprend au moins une électrode de référence selon l'une des revendications 1 à 13 et au moins une électrode de mesure adaptée à la fonction de capteur correspondante.

**15.** Capteur selon la revendication 14, caractérisé en ce qu'il comprend une combinaison de deux dispositions d'électrode de référence/électrolyte solide/ électrode de mesure différentes.

**16.** Capteur selon la revendication 15, caractérisé en ce que les deux électrodes de mesure se trouvent en contact avec le même milieu de mesure.

**17.** Capteur selon la revendication 15 ou 16, caractérisé en ce que les deux électrodes de référence forment au moins en partie un compartiment d'électrode de référence commun qui relie électriquement les deux électrolytes solides.

**18.** Capteur selon l'une des revendications 14 à 17, caractérisé en ce qu'il comprend une électrode de référence selon l'une des revendications 5 à 7 et une électrode de référence selon l'une des revendications 8 à 13 et une combinaison d'un électrolyte solide conducteur par ions oxygène et d'un électrolyte solide conducteur par cations avec des électrodes de mesure appropriées.

**19.** Utilisation d'une électrode de référence selon l'une des revendications 1 à 13 dans un capteur, notamment pour le dosage de gaz.

**20.** Utilisation d'un capteur selon l'une des revendications 15 à 18 pour le dosage de gaz, qui fournit un signal indépendant de la pression partielle d'oxygène du milieu de mesure.

**21.** Utilisation selon la revendication 19 ou 20 pour le dosage d'O$_2$, de CO$_2$, de NO$_x$ ou de SO$_x$.

Fig.1

# Fig. 2

# Fig. 3

# Fig.4

# Fig. 5